# FASCICULE DE BREVET EUROPEEN

(11) **EP 4 508 293 B1**
(45) Date de publication et mention de la délivrance du brevet: **18.02.2026**
(21) Numéro de dépôt: 23716316.7
(22) Date de dépôt: 03.04.2023
(51) Int. Cl.: E05D 15/10

(54) **DISPOSITIF DE GUIDAGE D'UNE PORTE COULISSANTE POUR VEHICULE**
VORRICHTUNG ZUR FÜHRUNG EINER SCHIEBETÜR EINES FAHRZEUGS
DEVICE FOR GUIDING A SLIDING DOOR OF A VEHICLE

(30) Priorité: 12.04.2022 FR 2203355
(43) Date de publication de la demande: 19.02.2025
(73) Titulaire: Flexis, 92100 Boulogne Billancourt (FR)
(72) Inventeur: GAILLARD, Philippe, 78150 Le Chesnay-Rocquencourt (FR); RAPIOR, Berenice, 78640 Villiers-Saint-Frédéric (FR)
(74) Mandataire: Lavoix
(86) Numéro de dépôt international: PCT/EP2023/058649
(87) Numéro de publication internationale: WO 2023/198491

(56) Documents cités:
- FR-A1- 2 779 996
- US-A1- 2020 148 043

## Description

### Domaine technique de l'invention

La présente invention concerne un dispositif de guidage d'une porte coulissante sur une caisse de véhicule, notamment d'une automobile, comprenant un moyen de guidage axial et un moyen de guidage angulaire rendant apte le déplacement de la porte d'une position fermée dans laquelle la porte obture une ouverture en affleurant sensiblement les parties environnantes de la carrosserie du véhicule et une position ouverte dans laquelle la porte est repoussée vers l'extérieur et déplacée vers l'arrière ou l'avant du véhicule sensiblement à l'écart de l'ouverture.

### Etat de la technique

Classiquement, dans de tels mouvements de porte coulissante, le guidage de la partie avant de la porte est réalisé à l'aide d'un rail de guidage possédant une extrémité incurvée en direction de l'intérieur de l'habitacle du véhicule, la porte étant reliée au rail de guidage par l'intermédiaire d'un chariot coulissant, rattaché à l'avant de la porte pour guider la porte dans l'alignement de la carrosserie lors de sa fermeture et repousser la porte vers l'extérieur de la carrosserie lors de son ouverture. Un tel dispositif, avec un rail incurvé pénétrant dans l'habitacle, présente toutefois l'inconvénient d'avoir un encombrement transversal important, ce dernier étant au minimum égal au débattement latéral de la porte coulissante, ce qui engendre un bossage inesthétique dans la zone de l'habitacle en regard du rail. Il est connu de FR2779996-A1 un dispositif de guidage de porte coulissante qui offre un débattement de porte latérale coulissante important et un encombrement transversal réduit, afin de permettre une intégration discrète du dispositif de guidage, et qui soit simple et économique à réaliser. Ce dispositif comprend un bras monté pivotant sur la porte et monté coulissant en deux points distincts respectivement le long d'un premier et d'un second rail de guidage qui présentent des trajectoires différentes pour assurer le pivotement du bras de façon à écarter la porte de la carrosserie en position ouverte et à diminuer l'encombrement transversal du bras en position fermée. Il a été relevé toutefois que l'architecture à superposition des premier et second rails de guidage l'un au-dessus de l'autre contraint le bras pivotant à évoluer verticalement entre les premier et second rails de guidage qui pour des raisons d'encombrement proches l'un de l'autre, ce qui tend à limiter la position de réglage vertical de la porte par un déplacement du bras de liaison par rapport aux rails à la porte. Quand bien même l'encombrement en transversal a été réduit par rapport à une solution classique de type à monorail, il a toutefois été relevé une géométrie difficilement intégrable sur caisse du fait d'un placement des premier et second rails l'un au-dessus de l'autre.

US2020/0148083A1 divulgue d'autre part un dispositif de guidage avec deux rails et un bras de liaison des rails avec une porte coulissante. Ce bras de liaison est formé d'une tôle pliée globalement plane et peu solide, au point que le dispositif de guidage dans son ensemble est peu robuste.

Une solution d'amélioration est donc nécessitée par les inconvénients susmentionnés.

### Présentation de l'invention

La présente invention a donc pour but de proposer un dispositif de guidage de porte coulissante qui offre un débattement de porte latérale coulissante important et requiert un encombrement réduit, tant transversalement que verticalement, afin de permettre une intégration discrète du dispositif de guidage, tout en étant simple et économique à réaliser.

L'invention a pour objet un dispositif de guidage de porte coulissante pour un véhicule, notamment une automobile, comportant un moyen de guidage axial constitué d'au moins un premier rail sensiblement rectiligne le long duquel un chariot est apte à coulisser et un moyen de guidage angulaire constitué d'un second rail, notamment d'extrémité incurvée, comportant une portion d'inclinaison par rapport au premier rail, et d'un bras de liaison à la porte. Le premier rail s'étend dans un plan, notamment sensiblement horizontal, dans lequel évolue le second rail de telle sorte que le bras de liaison reliant la porte au dispositif de guidage s'étend uniquement sous chacun des premier et second rails. Le moyen de guidage angulaire comprend un galet relié au bras de liaison et monté à coulissement le long du second rail de telle sorte que le déplacement du galet le long de la portion d'inclinaison du second rail engendre une rotation du bras de liaison autour du chariot, autour d'un premier axe de rotation. Le moyen de guidage axial comprend le chariot monté à coulissement le long du premier rail par l'intermédiaire d'une paire de galets reliés à une plaque s'étendant sous chacun des premier et second rails. Le bras de liaison dudit moyen de guidage angulaire comprend des branches parallèles entre elles, une extrémité du bras étant reliée audit moyen de guidage axial par l'intermédiaire d'un premier arbre de rotation coaxial dudit premier axe de rotation, une extrémité opposée du bras étant reliée à la porte par l'intermédiaire d'une platine liée à un second arbre de rotation coaxial d'un second axe de rotation et fixée sur la porte, notamment par vissage, chacun des premier et second arbres de rotation traversant de manière perpendiculaire lesdites branches parallèles. L'extrémité opposée du bras de liaison comprend une portion de section transversale sensiblement en U. Le débattement du bras de liaison autour du chariot ou de la platine s'effectue par leur placement en tout ou partie à l'intérieur du bras de liaison, tout du moins entre les branches parallèles.

Selon d'autres particularités et avantages de l'invention, le dispositif de guidage comprend les caractéristiques suivantes prises séparément ou en combinaison entre elles :
- les premier et second rails comprennent chacun une portion rectiligne, notamment une portion arrière, et en ce qu'ils sont assemblés l'un à l'autre, notamment par une soudure, au niveau de leur portion arrière ;
- il comprend un module de rails comprenant les premier et second rails, le module pouvant être fabriqué par des opérations de pliage de tôle fabriquée à partir d'un acier, notamment d'acier inoxydable,
- il comprend un module de rails comprenant les premier et second rails, le module pouvant être fabriqué par une opération d'extrusion d'un alliage, notamment d'aluminium ;
- le module de rails comprend des portions arrière de rails de profil sensiblement rectiligne ;
- chacun des premier et second rails est de profil sensiblement en U inversé, et en ce qu'une des branches parallèles de l'un des premier et second rails est relié directement à l'une des branches parallèles de l'autre des premier et second rails ;
- la plaque comporte une portion excentrée sur laquelle est positionnée une liaison à rotation en relation avec ledit moyen de guidage angulaire ;
- la platine, le bras de liaison et le chariot s'étendent respectivement dans des plans parallèles entre eux, notamment sensiblement horizontaux, sous chacun des rails de guidage ;
- chacun des galets est monté sur une tige, et en ce que la hauteur des galets est inférieure à la hauteur des branches parallèles des premier et second rails, de sorte que l'écart, notamment vertical, séparant la platine et/ou le bras de liaison et/ou le chariot du premier rail et/ou du second rail peut être variable afin de permettre un réglage de la porte par rapport à une ouverture de côté de caisse.

L'invention a aussi trait à un véhicule comportant une porte coulissante, notamment une porte latérale, un côté de caisse délimitant une ouverture apte à être fermée par la porte, qui se caractérise en ce qu'il comprend le dispositif de guidage tel que précédemment décrit.

### Présentation des figures

On comprendra mieux les buts, aspects et avantages de la présente invention, d'après la description présentée ci-après d'un mode de référant aux dessins annexés, dans lesquels :
- la [Fig.1] est une vue en perspective de trois quart avant d'un dispositif de guidage d'une porte coulissante selon l'invention ;
- la [Fig.2] est un agrandissement du dispositif de guidage de la figure 1 détaillant les éléments constitutifs du dispositif lorsque la porte est en position fermée ;
- la [Fig.3] est une vue en perspective de trois quart arrière du dispositif de la figure 2.

### Description détaillée de l'invention

Seuls les éléments nécessaires à la compréhension de l'invention ont été représentés. Pour faciliter la lecture des dessins les mêmes éléments portent les mêmes références d'une figure à l'autre.

La description des figures est réalisée en tenant compte d'un repère orthonormé d'axes X, Y et Z associé à un véhicule sur lequel le dispositif objet de l'invention est destiné à être monté pour rendre possible le déplacement d'une porte, où l'axe X correspond à l'axe longitudinal de l'avant vers l'arrière d'un véhicule, l'axe Y correspond à un axe transversal du côté gauche au côté droit du véhicule, et l'axe Z correspond à un axe vertical allant du bas vers le haut du véhicule.

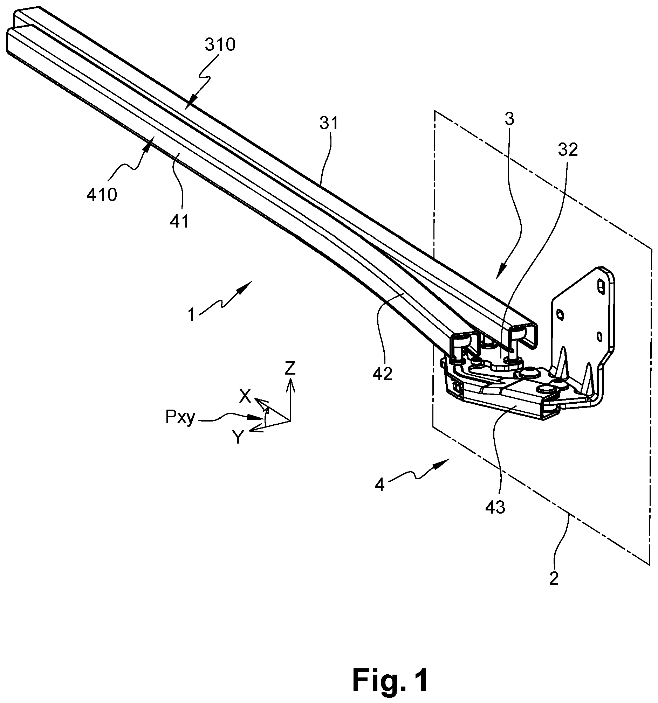

La [Fig.1] représente un dispositif de guidage 1 de la partie avant d'une porte coulissante 2, le dispositif étant en l'état de position fermée de la porte. Ce dispositif comporte un moyen de guidage axial 3 adjacent à un moyen de guidage angulaire 4, disposés sur la partie inférieure de l'encadrement d'une ouverture. Ledit moyen de guidage axial 3 comprend un premier rail de guidage 31, sur lequel coulisse un chariot 32 à galets 33 qui est rattaché à la porte 2 par un bras de liaison 43 monté à rotation sur d'un côté le chariot dudit moyen de guidage axial 3, d'un autre sur une platine 5 dédiée à l'attache de la porte audit dispositif de guidage 1.

Le moyen de guidage angulaire 4 comprend un second rail 41 dont une partie avant se compose d'une portion d'inclinaison 42, qui peut être rectiligne, courbée, voire de type à double courbure. Le moyen de guidage angulaire 4 est adapté à la cinématique de fermeture de la porte.

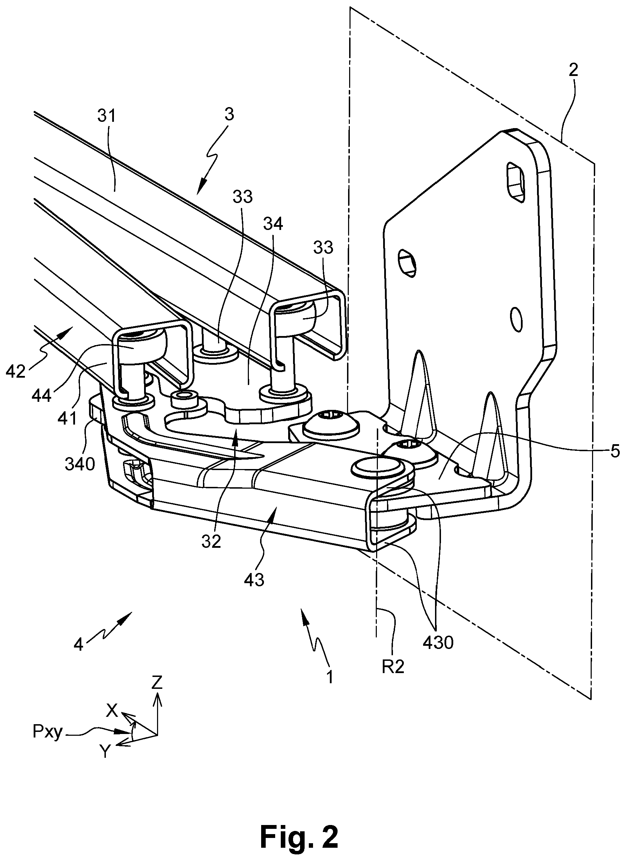

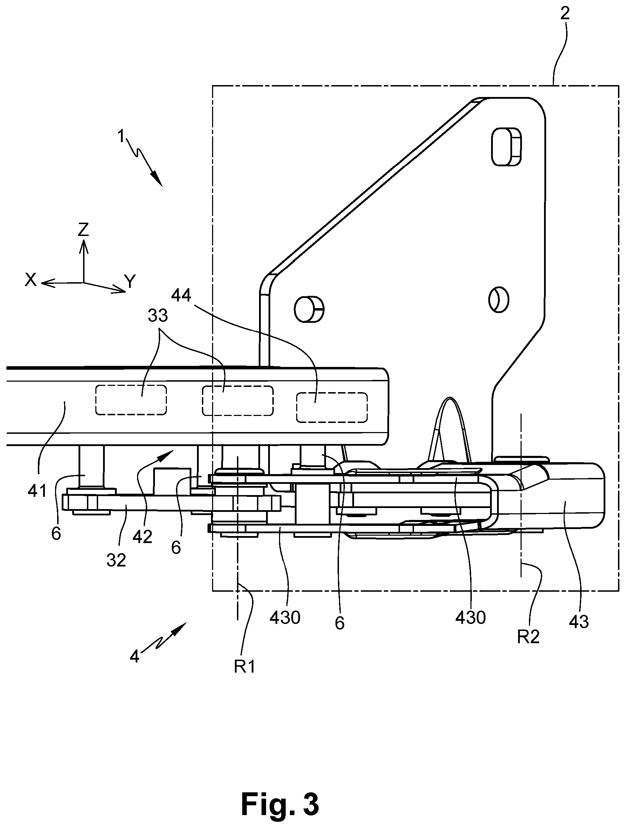

Les éléments constitutifs du dispositif de guidage 1 sont représentés en détails sur la [Fig.2] et la [Fig.3], selon deux plans de vue différents. Les premier et second rails de guidage 31, 41 comprennent des portions arrière 310, 410 qui sont jointives l'une à l'autre. Les portions arrière 310 et 410 sont parallèles l'une à l'autre et présentent un profil sensiblement rectiligne, ce qui permet une intégration sur caisse au niveau de l'encadrement de porte délimitant l'ouverture de côté de caisse à fermer. Chaque portion arrière 310, 410 est préférentiellement de section de section en U inversé, de sorte que chaque rail présente des branches parallèles entre elles, notamment une branche intérieure parallèle à une branche extérieure. Lesdits moyens de guidage axial 3 et angulaire 4 comprennent au moins un galet 33, 44 qui est assemblé à rotation autour d'une tige 6 pouvant être cylindrique d'axe parallèle aux branches parallèles de chacun des premier et second rails de guidage 31, 41. La fixation des premier et second rails 31, 41 entre eux peut être assurée par l'assemblage d'une des branches parallèles de l'un des premier et second rails 31, 41 à l'une des branches parallèles de l'autre des premier et second rails 31, 41, notamment par l'assemblage d'une branche intérieure du rail de guidage axial 31 avec une branche extérieure du rail de guidage angulaire 41.

Selon un autre mode de réalisation, la fixation des premier et second rails 31, 41 peut être assurée l'usage d'un moyen de fixation rapporté soudé aux parois de fond des premier et second rails 31, 41, chaque paroi de fond reliant les branches parallèles de l'un ou de l'autre des premier et second rails 31, 41.

Compte tenu de la fonction de déplacement en transversal de la porte coulissante, les galets 33 et 44 viennent uniquement en appui contre les faces intérieures des branches parallèles des rails. Chaque galet 33, 44 est destiné à pivoter autour d'une tige 6 approximativement d'axe Z lorsque le dispositif de guidage 1 est positionné sur la caisse du véhicule.

Le premier rail 31 est en relation avec deux galets 33 disposés à l'intérieur du premier rail. La tige 6 comprend une partie sommitale au niveau de laquelle est positionné le galet 33. L'extrémité opposée est assemblée au travers d'une plaque 34. La plaque 34 comportant les galets 33 et les tiges 6 définissent un chariot 32 destiné au coulissement longitudinal. La plaque 34 comprend une portion excentrée 340 qui est en relation avec le moyen de guidage angulaire 4. Cette relation est réalisée par un premier arbre de rotation coaxial d'un premier axe de rotation R1 qui permet au bras de liaison 43 de pivoter autour d'un axe Z sur le chariot 32.

Le second rail 41 est en relation avec un galet 44 disposé à l'intérieur du second rail. La tige 6 comprend une partie sommitale au niveau de laquelle est positionné le galet 44. L'extrémité opposée de la tige 6 est assemblée au travers du bras de liaison 43.

La bras de liaison 43 comprend deux branches parallèles 430 qui vise à améliorer la rigidité de l'assemblage à rotation avec respectivement le chariot 32 et la platine 5.

Comme cela est représenté à la [Fig.2], la liaison à rotation autour d'un second axe de rotation R2 du bras de liaison 43 sur la platine 5 s'effectue ainsi via un second arbre de rotation, de section cylindrique, coaxial du second axe de rotation R2, traversant les branches parallèles 430 du bras de liaison 43. La liaison à rotation R2 peut s'effectuer via une bague formant un pallier et entourant le second arbre, tout en étant disposée entre les branches parallèles 430. La bague peut être réalisée par surmoulage de la platine 5, au niveau d'une ouverture traversante coaxiale à la bague. Le second arbre peut être positionné puis serti sur le bras de liaison 43 après le placement la platine 5 à l'intérieur d'une extrémité du bras de liaison 43.

Les premier et second axe de rotation R1 et R2 sont sensiblement parallèles à l'axe Z.

Comme cela est représenté à la [Fig.3], la tige 6 du galet 44 traverse de part en part chacune des branches parallèles 430. La liaison à rotation R1 du bras de liaison 43 sur le chariot 32 peut ainsi s'effectuer via un arbre cylindrique traversant les branches parallèles 430 du bras de liaison 43. La liaison à rotation R1 peut s'effectuer via une bague formant un pallier et entourant l'arbre cylindrique, tout en étant disposée entre les branches parallèles 430. La bague peut être réalisée par surmoulage de la plaque 34 du chariot 32, au niveau d'une ouverture traversante coaxiale à la bague. L'arbre cylindrique peut être positionné puis serti sur le bras de liaison 43 après le placement la plaque 34 à l'intérieur d'une extrémité du bras de liaison 43 opposée à celle de la liaison à rotation R1.

Le bras de liaison 43 peut être réalisé par pliage d'une plaque d'acier. Il comprend une portion de section sensiblement en U incliné de telle sorte que les branches parallèles s'étendent le long d'un axe Y et que la paroi latérale, notamment une paroi latérale intérieure, de liaison des branches parallèle s'étend dans un plan sensiblement d'axe Z. Les branches parallèles 430 du bras de liaison 43 peuvent s'étendre chacune de manière sensiblement parallèle aux portions de fond des premier et second rails 31, 41.

La conception du bras de liaison 43 de section transversale sensiblement en U permet de compacter l'ensemble car le débattement du bras de liaison 43 autour du chariot 32 ou de la platine 5 peut s'effectuer par leur placement en tout ou partie à l'intérieur du bras de liaison 43, tout du moins entre les branches parallèles 430.

Le bras de liaison 43 est de profil longitudinal sensiblement en J avec une portion rectiligne de section transversale en U et une portion inclinée étant dépourvue de la paroi latérale reliant des branches parallèles 430.

La porte 2 est solidaire d'une équerre qui est rapportée sur la platine 5 et assemblée par vissage. Sur la [Fig.2], la porte 2 est dans une position de fermeture, la platine 5 s'étend pour partie à l'intérieur du bras de liaison 43. En position de fermeture de la porte 2, la platine 5 est disposée longitudinalement au prolongement de la plaque 34 du chariot 32, soit l'un au prolongement de l'autre selon un axe X. Du fait de la liaison à rotation R2 liant le bras de liaison 43 à la platine 5, la platine 5 est apte à prendre une position sensiblement à 90° par rapport au bras de liaison 43. En position d'ouverture de la porte 2, la platine 5 est disposée transversalement au prolongement de la plaque 34 du chariot 32, soit l'un au prolongement de l'autre selon un axe Y, voire en contact latéral. Cela améliore la compacité du dispositif de guidage, la platine 5 étant apte à être accolée latéralement au chariot 32.

Le moyen de guidage angulaire 4 du bras de liaison 43 comprend le second rail 41 dont une portion d'inclinaison 42 délimitant l'extrémité avant du second rail 41 est transversalement éloignée de l'extrémité libre avant du premier rail 31. La portion d'inclinaison 42 forme ainsi un angle constant ou évolutif avec le premier rail en direction de l'intérieur de l'habitacle du véhicule. La portion d'inclinaison 42 peut être rectiligne ou courbe tout en s'étendant dans un plan Pxy. La présence de cet angle permet une rotation du bras de liaison 43 autour du point de rotation R1 de manière que lorsque le galet 44 est dans la portion d'inclinaison 42, le bras de liaison pivote d'autant que l'écart transversal d'axe Y entre les premier et second rails 31, 41 est important.

Les premier et second rails 31, 41 sont réalisés de manière séparée et par pliage de tôle d'acier, notamment à partir d'un acier inoxydable.

Selon une variante de réalisation, les premier et second rails 31, 41 sont réalisés en matière plastique, notamment par injection dans un moule. Les premier et second rails pourraient directement être réalisés par moulage d'une matière plastique dans un élément destiné à être rapporté sur le côté de caisse du véhicule, notamment un marche pied, ce qui favoriserait son intégration.

Selon une autre variante de réalisation, les premier et second rails 31, 41 appartiennent à un module de rails qui peut être réalisé par extrusion d'un alliage, notamment en aluminium, notamment grâce à une buse d'extrusion à profil évolutif pour créer les portions rectiligne et incurvée.

Les premier et second rails 31, 41 forment alors un module de rails réalisé d'un seul tenant, ce qui en facile le montage sur véhicule.

Le dispositif de guidage 1 est de conception compacte, tout du moins selon au moins une composante verticale. Il permet de placer l'arrière de la porte 2 à proximité d'un bord de la carrosserie du véhicule tout en amenant l'avant de la porte 2 en affleurement avec la carrosserie du véhicule lors de sa fermeture et à écarter la porte 2 de la carrosserie lors de son ouverture.

Du fait de son caractère compact, un tel dispositif de guidage peut être disposé au niveau supérieur ou inférieur de l'ouverture de côté de caisse, de sorte que les moyens participant au débattement latéral de la porte 2 coulissante est plus facilement intégrable dans un véhicule, ce qui améliore le volume utile de ce dernier, notamment en termes d'habitabilité.

Un tel dispositif de guidage 2 permet d'obtenir un encombrement transversal et vertical réduit, indépendant du décalage latéral nécessaire à l'ouverture de la porte. En effet, dans le dispositif de guidage de porte selon l'invention, le décalage transversal de la porte est fonction de la portion d'inclinaison du second rail et non de l'avancement du rail de guidage à l'intérieur de l'habitacle. Ce dispositif permet d'obtenir un grand débattement latéral de la porte mais avec un faible décalage transversal du second rail du fait de l'angle formé entre la portion d'inclinaison du second rail et le premier rail. Le débattement de la porte 2 est obtenu par la mise en rotation du bras de liaison 43 de la porte au dispositif d'articulation 1, autour d'une double liaison à rotation R1 et R2, respectivement autour du chariot 32 et de la platine 5.

Ce faible encombrement transversal et vertical du dispositif de guidage permet de réaliser une cavité de réception des premier et second rails de guidage de faible profondeur et hauteur, ce qui le rend moins visible de l'intérieur de l'habitacle, ou moins intrusif dans le plancher du véhicule, ce qui est notamment un avantage recherché dans l'hypothèse d'un véhicule électrique selon lequel un module de batterie est disposé sous le plancher. Le faible encombrement du dispositif permet également de conserver un pied avant de forte section offrant une bonne résistance en cas de choc. Cette résistance au choc peut également être facilement renforcée par l'utilisation d'un caisson de porte de grande profondeur permise par le débattement latéral important offert par le dispositif de guidage selon l'invention.

Le dispositif de guidage selon l'invention présente également l'avantage de permettre de faire évoluer facilement la trajectoire de la porte en modifiant uniquement la trajectoire de la portion d'inclinaison 42 du second rail 41 de guidage. Bien entendu, l'invention n'est nullement limitée au mode de réalisation décrit et illustré qui n'a été donné qu'à titre d'exemple. A titre d'exemple, selon une variante de réalisation, un tel dispositif de guidage pourrait aussi intégrer un galet porteur, notamment en relation mécanique avec le chariot de sorte qu'une partie du poids de la porte coulissante puisse être réparti au niveau du premier rail, qui serait alors de conception adapté, par exemple en recourant à une épaisseur de matière plus conséquente.

Au contraire, l'invention comprend tous les équivalents techniques des moyens décrits ainsi que leurs combinaisons pour autant qu'elles entrent dans le cadre des revendications annexées.

## Revendications

1. Dispositif de guidage (1) de porte coulissante (2) pour véhicule, notamment une automobile, comportant un moyen de guidage axial (3) constitué d'au moins un premier rail (31) sensiblement rectiligne le long duquel un chariot (32) est apte à coulisser, et un moyen de guidage angulaire (4) constitué d'un second rail (41), notamment d'extrémité incurvée (42), comportant une portion d'inclinaison par rapport au premier rail (31), et d'un bras de liaison (43) à la porte, dans lequel
- le premier rail (31) s'étend dans un plan (Pxy), notamment sensiblement horizontal, dans lequel évolue le second rail (41) de telle sorte que le bras de liaison (43) reliant la porte au dispositif de guidage s'étend uniquement sous chacun des premier et second rails (31, 41) ; et
- ledit moyen de guidage angulaire (4) comprend un galet (44) relié au bras de liaison (43) et monté à coulissement le long du second rail (41) de telle sorte que le déplacement du galet (44) le long de la portion d'inclinaison (42) du second rail (41) engendre une rotation du bras de liaison (43) autour du chariot (32), autour d'un premier axe de rotation (R1),
**caractérisé en ce que**
- ledit moyen de guidage axial (3) comprend le chariot (32) monté à coulissement le long du premier rail par l'intermédiaire d'une paire de galets (33) reliés à une plaque (34) s'étendant sous chacun des premier et second rails (31, 41),
- le bras de liaison (43) dudit moyen de guidage angulaire (4) comprend des branches parallèles (430) entre elles,
- une extrémité du bras est reliée audit moyen de guidage axial (3) par l'intermédiaire d'un premier arbre de rotation coaxial dudit premier axe de rotation (R1),
- une extrémité opposée du bras est reliée à la porte (2) par l'intermédiaire d'une platine (5) liée à un second arbre de rotation coaxial d'un second axe de rotation (R2) et fixée sur la porte, notamment par vissage,
- chacun des premier et second arbres de rotation traverse de manière perpendiculaire lesdites branches parallèles (430),
- l'extrémité opposée du bras de liaison (43) comprend une portion de section transversale sensiblement en U, et
- le débattement du bras de liaison (43) autour du chariot (32) ou de la platine (5) s'effectue par leur placement en tout ou partie à l'intérieur du bras de liaison (43), tout du moins entre les branches parallèles (430).

2. Dispositif de guidage (1) selon la revendication précédente, **caractérisé en ce que** les premier et second rails (31, 41) comprennent chacun une portion rectiligne, notamment une portion arrière (310, 410), et **en ce qu'**ils sont assemblés l'un à l'autre, notamment par une soudure, au niveau de leur portion arrière (310, 410).

3. Dispositif de guidage (1) selon la revendication 1, **caractérisé en ce qu'**il comprend un module de rails comprenant les premier et second rails (31, 41), le module étant fabriqué par une opération de pliage de tôle d'acier, notamment d'acier inoxydable, de telle manière que le module a une portion arrière de rails (310, 410) de profil sensiblement rectiligne.

4. Dispositif de guidage (1) selon la revendication 1, **caractérisé en ce qu'**il comprend un module de rails comprenant les premier et second rails (31, 41), le module étant fabriqué par une opération d'extrusion d'un alliage, notamment d'aluminium.

5. Dispositif de guidage (1) selon la revendication 4, **caractérisé en ce que** le module de rails est réalisé grâce à une buse d'extrusion à profil évolutif pour créer des portions rectiligne et incurvée.

6. Dispositif de guidage (1) selon la revendication 5, **caractérisé en ce que** les premier et second rails (31, 41) forment un module de rails réalisé d'un seul tenant.

7. Dispositif de guidage (1) selon l'une quelconque des revendications précédentes, **caractérisé en ce que** chacun des premier et second rails (31, 41) est de profil sensiblement en U inversé, et **en ce qu'**une des branches parallèles de l'un des premier et second rails est relié directement à l'une des branches parallèles de l'autre des premier et second rails.

8. Dispositif de guidage (1) selon l'une quelconque des revendications précédentes, **caractérisé en ce que** la plaque (34) comportant une portion excentrée (340) sur laquelle est positionnée une liaison à rotation (R1) en relation avec ledit moyen de guidage angulaire (4).

9. Dispositif de guidage (1) selon l'une quelconque des revendications précédentes, **caractérisé en ce que** la platine (5), le bras de liaison (43) et le chariot (32) s'étendent respectivement dans des plans (Pxy) parallèles entre eux, notamment sensiblement horizontaux, sous chacun des rails de guidage (31, 41).

10. Dispositif de guidage (1) selon l'une des revendications précédentes , **caractérisé en ce que** chacun des galets (33, 44) est monté sur une tige (6), et **en ce que** la hauteur des galets est inférieure à la hauteur des branches parallèles des premier et second rails, de sorte que l'écart, notamment vertical, séparant la platine (5) et/ou le bras de liaison (43) et/ou le chariot (32) du premier rail (31) et/ou du second rail (41) peuvent être variable afin de permettre un réglage de la porte par rapport à une ouverture de côté de caisse.

11. Véhicule comportant une porte coulissante, notamment une porte latérale, un côté de caisse délimitant une ouverture apte à être fermée par la porte, **caractérisé en ce qu'**il comprend un dispositif de guidage (1) selon l'une quelconque des revendications 1 à 10.

## Patentansprüche

1. Führungsvorrichtung (1) einer Schiebetür (2) für ein Fahrzeug, insbesondere ein Automobil, umfassend eine axiale Führungseinrichtung (3), die aus mindestens einer ersten, im Wesentlichen geradlinigen Schiene (31) besteht, entlang derer ein Schlitten (32) in der Lage ist, zu gleiten, und eine Winkelführungseinrichtung (4), die aus einer zweiten Schiene (41), insbesondere mit einem gekrümmten Ende (42), die einen Neigungsabschnitt in Bezug auf die erste Schiene (31) aufweist, und einem Verbindungsarm (43) mit der Tür besteht, wobei
- die erste Schiene (31) sich in einer Ebene (Pxy), insbesondere im Wesentlichen horizontal, erstreckt, in der sich die zweite Schiene (41) bewegt, sodass der Verbindungsarm (43), der die Tür mit der Führungsvorrichtung verbindet, sich nur unter jeder der von der ersten und der zweiten Schiene (31, 41) erstreckt; und
- die Winkelführungseinrichtung (4) eine Rolle (44) umfasst, die mit dem Verbindungsarm (43) verbunden und entlang der zweiten Schiene (41) verschiebbar montiert ist, sodass die Verschiebung der Rolle (44) entlang des Neigungsabschnitts (42) der zweiten Schiene (41) zu einer Drehung des Verbindungsarms (43) um den Schlitten (32) um eine erste Drehachse (R1) führt,
**dadurch gekennzeichnet, dass**
- die axiale Führungseinrichtung (3) den Schlitten (32) umfasst, der über ein Paar Rollen (33), die mit einer Platte (34) verbunden sind, die sich unter jeder von der ersten und der zweiten Schiene (31, 41) erstreckt, gleitend entlang der ersten Schiene montiert ist,
- der Verbindungsarm (43) der Winkelführungseinrichtung (4) zueinander parallele Schenkel (430) umfasst,
- ein Ende des Arms über eine erste Drehwelle, die koaxial zu der ersten Drehachse (R1) ist, mit der axialen Führungseinrichtung (3) verbunden ist,
- ein entgegengesetztes Ende des Arms mit der Tür (2) über eine Platine (5) verbunden ist, die mit einer zweiten Drehwelle koaxial zu einer zweiten Drehachse (R2) verbunden ist und an der Tür befestigt ist, insbesondere durch Verschrauben,
- jede von der ersten und der zweiten Drehwelle die parallelen Schenkel (430) senkrecht durchquert,
- das gegenüberliegende Ende des Verbindungsarms (43) einen im Wesentlichen U-förmigen Querschnittsabschnitt umfasst, und
- die Auslenkung des Verbindungsarms (43) um den Schlitten (32) oder die Platte (5) erfolgt, indem diese ganz oder teilweise im Inneren des Verbindungsarms (43), zumindest zwischen den parallelen Schenkeln (430), platziert werden.

2. Führungsvorrichtung (1) nach dem vorherigen Anspruch, **dadurch gekennzeichnet, dass** die erste und die zweite Schiene (31, 41) jeweils einen geradlinigen Abschnitt, insbesondere einen hinteren Abschnitt (310, 410), umfassen und dass sie an ihrem hinteren Abschnitt (310, 410) miteinander verbunden sind, insbesondere durch eine Schweißnaht.

3. Führungsvorrichtung (1) nach Anspruch 1, **dadurch gekennzeichnet, dass** sie ein Schienenmodul umfasst, das die erste und die zweite Schiene (31, 41) umfasst, wobei das Modul durch einen Biegevorgang von Stahlblech, insbesondere Edelstahl, hergestellt wird, sodass das Modul einen hinteren Abschnitt der Schienen (310, 410) mit einem im Wesentlichen geradlinigen Profil aufweist.

4. Führungsvorrichtung (1) nach Anspruch 1, **dadurch gekennzeichnet, dass** sie ein Schienenmodul umfasst, das die erste und die zweite Schiene (31, 41) umfasst, wobei das Modul durch einen Extrusionsvorgang einer Legierung, insbesondere Aluminium, hergestellt ist.

5. Führungsvorrichtung (1) nach Anspruch 4, **dadurch gekennzeichnet, dass** das Schienenmodul durch eine Extrusionsdüse mit skalierbarem Profil hergestellt wird, um geradlinige und gekrümmte Abschnitte zu erzeugen.

6. Führungsvorrichtung (1) nach Anspruch 5, **dadurch gekennzeichnet, dass** die erste und die zweite Schiene (31, 41) ein Schienenmodul bilden, das aus einem Stück gefertigt ist.

7. Führungsvorrichtung (1) nach einem der vorherigen Ansprüche, **dadurch gekennzeichnet, dass** jede von der ersten und der zweiten Schiene (31, 41) von einem im Wesentlichen umgekehrten U-Profil ist, und dass einer der parallelen Schenkel einer von der ersten und der zweiten Schiene direkt mit einem der parallelen Schenkel der anderen von der ersten und der zweiten Schiene verbunden ist.

8. Führungsvorrichtung (1) nach einem der vorherigen Ansprüche, **dadurch gekennzeichnet, dass** die Platte (34) einen exzentrischen Abschnitt (340) umfasst, an dem eine Drehverbindung (R1) in Verbindung mit der Winkelführungseinrichtung (4) positioniert ist.

9. Führungsvorrichtung (1) nach einem der vorherigen Ansprüche, **dadurch gekennzeichnet, dass** die Platine (5), der Verbindungsarm (43) und der Schlitten (32) sich jeweils in zueinander parallelen, insbesondere im Wesentlichen horizontalen Ebenen (Pxy) unter jeder der Führungsschienen (31, 41) erstrecken.

10. Führungsvorrichtung (1) nach einem der vorherigen Ansprüche , **dadurch gekennzeichnet, dass** jede der Rollen (33, 44) auf einer Stange (6) montiert ist und dass die Höhe der Rollen geringer ist als die Höhe der parallelen Schenkel der ersten und der zweiten Schiene, sodass der Abstand, insbesondere der vertikale Abstand, der die Platine (5) und/oder den Verbindungsarm (43) und/oder den Schlitten (32) von der ersten Schiene (31) und/oder der zweiten Schiene (41) trennt, variabel sein kann, um eine Einstellung der Tür in Bezug auf eine Öffnung auf der Seite des Kastens zu ermöglichen.

11. Fahrzeug, umfassend eine Schiebetür, insbesondere einer Seitentür, wobei eine Karosserieseite eine Öffnung begrenzt, die geeignet ist, um von der Tür geschlossen zu werden, **dadurch gekennzeichnet, dass** es eine Führungsvorrichtung (1) nach einem der Ansprüche 1 bis 10 umfasst.

## Claims

1. A guide device (1) for a sliding door (2) of a vehicle, in particular a motor vehicle, having an axial guiding means (3) consisting of at least a first substantially rectilinear rail (31) along which a carriage (32) is apt to slide, and an angular guiding means (4) consisting of a second rail (41), in particular with a curved end (42), having a sloped portion with respect to the first rail (31), and of a connecting arm (43) connecting to the door, wherein
- the first rail (31) extends in a plane (Pxy), in particular substantially horizontal, wherein moves the second rail (41) in such a way that the connecting arm (43) connecting the door to the guide device extends only under each of the first and second rails (31, 41); and
- said angular guiding means (4) comprises a roller (44) connected to the connecting arm (43) and mounted apt to slide along the second rail (41) in such a way that the movement of the roller (44) along the sloped portion (42) of the second rail (41) generates a rotation of the connecting arm (43) about the carriage (32), in particular about a first axis of rotation (R1)
**characterized in that**
- said axial guiding means (3) comprises the carriage (32) slidably mounted along the first rail by means of a pair of rollers (33) connected to a plate (34) extending under each of the first and second rails (31, 41),
- the connecting arm (43) of said angular guiding means (4) comprises two parallel branches (430),
- one end of the arm is connected to said axial guiding means (3) by means of a first axis of rotation coaxial with said first axis of rotation (R1),
- an opposite end of the arm being connected to the door (2) by means of a mounting plate (5) is connected to a rotation shaft coaxial with a second axis of rotation (R2) and fastened onto the door, in particular by screw fastening,
- each of the first and second rotation shafts extending perpendicularly through said parallel branches (430),
- the opposite end of the connecting arm (43) comprises a portion of substantially U-shaped cross-section, and
- the movement of the connecting arm (43) around the carriage (32) or the mounting plate (5) is achieved by placing same, in full or in part, inside the connecting arm (43), at least between the parallel branches (430).

2. The guide device (1) according to the preceding claim, **characterized in that** the first and second rails (31, 41) each comprise a rectilinear portion, in particular a rear portion (310, 410), and **in that** same are assembled together, in particular by welding, at the rear portion (310, 410) thereof.

3. The guide device (1) according to claim 1, **characterized in that** same comprises a rail module comprising the first and second rails (31, 41), the module being manufactured by a folding operation of sheet steel, in particular stainless steel, in such a way that the module has a rear rail portion (310, 410) with a substantially rectilinear profile.

4. The guide device (1) according to claim 1, **characterized in that** same comprises a rail module comprising the first and second rails (31, 41), the module being manufactured by means of an operation of extrusion of an alloy, in particular an aluminum alloy.

5. The guide device (1) according to claim 4, **characterized in that** the rail module is produced by means of an extrusion nozzle with an evolving profile to create the rectilinear and curved portions.

6. The guide device (1) according to claim 5, **characterized in that** the first and second rails (31, 41) form a module of rails made in one piece

7. The guide device (1) according to any of the preceding claims, **characterized in that** each of the first and second rails (31, 41) has a substantially inverted-U-shaped profile, and **in that** one of the parallel branches of one of the first and second rails is connected directly to one of the parallel branches of the other of the first and second rails.

8. The guide device (1) according to any of the preceding claims, **characterized in that** the plate including an off-centered portion (340) on which a rotational connection (R1) is positioned in relation to said angular guiding means (4).

9. The guide device (1) according to any of the preceding claims, **characterized in that** the mounting plate (5), the connecting arm (43) and the carriage (32) extend respectively in planes (Pxy) parallel to each other, in particular substantially horizontal planes, under each of the guide rails (31, 41).

10. The guide device (1) according to one of the preceding claims, **characterized in that** each of the rollers (33, 44) is mounted on a rod (6), and **in that** the height of the rollers is less than the height of the parallel branches of the first and second rails, so that the gap, in particular vertical, separating the mounting plate (5) and/or the connecting arm (43) and/or the carriage (32) from the first rail (31) and/or the second rail (41) can be variable in order to make possible an adjustment of the door relative a body side opening.

11. A vehicle having a sliding door, in particular a lateral door, a body side delimiting an opening apt to be closed by the door, **characterized in that** same comprises a guide device (1) according to any one of claims 1 to 10.
